# EUROPEAN PATENT APPLICATION

(11) **EP 0 638 901 A1**
(43) Date of publication of application: **15.02.1995**
(21) Application number: 94907088.2
(22) Date of filing: 22.02.1994
(51) Int. Cl.: G11B 23/03, G11B 23/28

(54) **DISK CARTRIDGE**

(30) Priority: 24.02.1993 JP 58080/93; 14.05.1993 JP 113261/93
(71) Applicant: SONY CORPORATION, Tokyo 141 (JP)
(72) Inventor: TAKAHASHI, Kenji, Shinagawa-ku Tokyo 141 (JP)
(74) Representative: Cotter, Ivan John
(86) International application number: JP9400268
(87) International publication number: WO9419804

(57) **Abstract**

A disk cartridge includes a cartridge body, a shutter, a shutter lock member and a write-protect member. The cartridge body stores a rotating disc-like recording medium, and has a radial slot to expose part of the medium for recording/reproduction. This cartridge body comprises a pair of halves made, as a whole, of a transparent synthetic resin material. The shutter is movably fitted to the cartridge body and opens and closes the slot for recording/reproduction. The shutter lock member is disposed inside the cartridge body, engages with the shutter at the position at which the shutter closes the slot, and keeps the shutter at this closing position. The shutter lock member is made of a transparent synthetic resin material as a whole. The write protect member is movably disposed inside the cartridge body, and is operable from outside. It is made of a transparent synthetic resin as a whole.

## Description

### Technical Field

This invention relates to a disc cartridge containing an information recording medium capable of recording information signals, such as an optical disc or a magneto-optical disc. More particularly, it relates to a disc cartridge having a cartridge main body molded from a transparent synthetic resin.

### Background Art

In general, with a disc cartridge containing an information recording medium capable of recording information signals, such as music signals or video signals, e.g. an optical disc or a magneto-optical disc, scratches formed on or dust and dirt affixed to the surface of the information recording medium render it impossible to record or reproduce information signals. For this reason, the disc cartridge is provided with a shutter movably mounted on a main cartridge body for opening and closing a recording/reproducing aperture. The disc cartridge having such shutter member is provided with a shutter lock member for normally holding the shutter member at a position of closing the recording/reproducing aperture.

The shutter lock member is rotatably supported on a supporting shaft set upright at a front side corner of the lower half of the disc cartridge. The shutter lock member has a pivotal supporting portion having an opening traversed by a supporting shaft, a lock arm portion having an engagement recess engaged with an engagement lug formed on the shutter member, and an elastic displacement portion protuberantly mounted from the pivotal supporting portion for facing the lock arm portion.

When the disc cartridge is inserted into the recording/reproducing apparatus, the shutter lock member has its lock arm portion elastically displaced and run into partial rotation by a shutter opening member provided on the recording/reproducing apparatus. As a result, the engagement lug of the shutter member is disengaged from the engagement recess for unlocking the shutter member closing the recording/reproducing aperture. When the disc cartridge is further intruded into the recording/reproducing apparatus from the state of unlocking of the shutter member, the shutter member is moved in a direction of opening the recording/reproducing aperture for opening the aperture. Consequently, the shutter lock member, performing such elastic displacement or partial rotation, is formed of a polyacetal resin having superior sliding wear characteristics, spring characteristics or creep resistance.

The disc cartridge has a mistaken recording inhibiting mechanism for inhibiting destruction or inadvertent erasure of the information signals once recorded on the information recording medium by the recording of other information signals. Such mistaken recording inhibiting mechanism is provided with a mistaken recording inhibiting member capable of allowing for selection of a first position enabling re-recording of information signals on the information recording medium housed within the disc cartridge or a second position disabling re-recording for preventing erasure of the recorded information signals. The mistaken inhibiting member is arranged within the disc cartridge so as to be movable between the first position and the second position. That is, the mistaken recording inhibiting member is movably associated with an upstanding slide guide section set upright on the inner surface of the lower cartridge half in register with a mistaken recording detection opening bored at a corner of the lower half of the disc cartridge. The mistaken recording inhibiting member is formed as one with an operating arm portion and an elastic arm portion, beginning from the mistaken inhibiting portion shaped to cover the mistaken recording detecting opening as the base.

The mistaken recording inhibiting member, slid within the disc cartridge, has its elastic arm portion slid in abutting contact with a slide guide section provided at the foremost part of the elastic arm portion, until an engagement protrusion formed at the distal end of the elastic arm portion is engaged in first or second engagement recesses. By such engagement of the engagement protrusion with the engagement recesses, the mistaken recording inhibiting portion is held at the first position of closing the mistaken recording opening or at the second position of opening the mistaken recording opening.

With the disc cartridge having a main cartridge body made up of a rectangular upper half and a rectangular lower half each having an upstanding outer peripheral wall member, the upper and lower cartridge halves of the cartridge main body are formed of transparent synthetic resin for allowing the information recording medium contained therein to be seen through from outside and improving design-related discrimination characteristics.

With the disc cartridge having the cartridge main body formed of a transparent material, the shutter lock member contained in the cartridge main body may be seen through from outside. Above all, the shutter lock member employed in the conventional disc cartridge is formed of an opaque material having a milk-white color, such as a polyacetal resin, so that it may be seen clearly from outside the cartridge main body. Since the state of locking of the shutter member by the shutter lock member may be clearly seen from outside the cartridge main body, it may occur that the user intentionally operates and unlocks the shutter member in order to satisfy his or her caprice.

In addition, should the milk-white colored opaque shutter lock member of, for example, a polyacetal resin, be incorporated into the transparent cartridge main body, it may be clearly seen from outside of the cartridge main body, thus seriously detracting from the appearance of the disc cartridge.

Similarly to the above-mentioned shutter lock member, the mistaken recording inhibiting member, molded of a polyacetal resin, may be seen from outside when built in the transparent cartridge main body, thus seriously detracting from the appearance of the disc cartridge. Thus it may be contemplated to form the mistaken recording inhibiting member from a transparent synthetic resin. However, should the mistaken recording inhibiting member be formed of the transparent synthetic material, it becomes difficult to discern it from the transparent cartridge main body, thus making it impossible to visually discern the setting state of the mistaken recording inhibiting member.

It is therefore an object of the present invention to provide a disc cartridge in which, even although the cartridge main body is formed of a transparent synthetic resin material, and hence the shutter lock member in the main cartridge body may be seen from outside the shutter lock member, the shutter lock member may be prevented from being inadvertently actuated from fancy.

It is another object of the present invention to provide a disc cartridge in which the cartridge main body is formed of a synthetic resin material and thus whether the mistaken recording inhibiting member is set to the re-recording enabling first position or the re-recording disabling second position can be discerned in order to prevent occurrence of the mistaken operation.

### Disclosure of the Invention

For accomplishing the above objects, the present invention provides a disc cartridge including a cartridge main body made up of a pair of cartridge halves formed in their entirety of a transparent synthetic material, a shutter mounted for movement on the cartridge main body for opening and closing the recording/reproducing aperture, and a shutter lock member formed in its entirety of a transparent synthetic material. The cartridge main body has a disc-shaped recording medium rotatably contained therein and includes a recording/reproducing aperture for exposing at least a portion of the recording medium contained therein to outside along its radius. The shutter lock member is engaged with and holds the shutter at a position of closing the recording/reproducing aperture by the shutter. The cartridge main body is formed by a pair of cartridge halves formed in their entirety by a transparent synthetic material. The shutter lock member is similarly is formed in its entirety of a transparent synthetic material.

The transparent synthetic material of the pair of the cartridge halves and the shutter lock member is a polycarbonate resin.

The present invention also provides a disc cartridge including a cartridge main body made up of a pair of cartridge halves formed in their entirety of a transparent synthetic material. The cartridge main body has a disc-shaped recording medium rotatably contained therein and includes a recording/reproducing aperture for exposing at least a portion of the recording medium contained therein to outside along its radius, and a detection opening for indicating whether or not recording of information signals on the disc-shaped recording medium contained therein is possible. The disc cartridge also includes a mistaken recording inhibiting member which is movably mounted in the main cartridge body and which has an operating portion having at least its portion exposed to outside via an operating opening formed in a lateral surface of the cartridge main body. The mistaken recording inhibiting member also has an opening/closure portion for opening and closing the detection opening, and a holding portion operated by the operating portion for holding the opening/closure portion at a first position of closing the detection opening and a second position of opening the detection opening. The cartridge main body is made up of a pair of cartridge halves formed in their entirety of a transparent synthetic material. The operating portion, opening/closure portion and the holding portion making up the mistaken recording inhibiting member are formed integrally of a transparent synthetic material.

The transparent synthetic material of the upper and lower cartridge halves and the mistaken recording inhibiting member is a polycarbonate resin.

The operating portion or the mistaken recording inhibiting portion of the mistaken recording inhibiting member has an index indicating the longest recordable time on the disc-shaped recording medium contained in the disc cartridge.

With the above-described disc cartridge according to the present invention, since the upper and lower halves making up the cartridge main body are formed of a transparent synthetic material, such as polycarbonate resin, while the shutter lock member is also formed of a transparent synthetic material, the shutter lock member is visually confounded with the transparent cartridge main body and cannot be identified when viewed from outside of the cartridge main body. Thus there is no such risk of mistaken operation of the shutter lock member for fancy sake. On the other hand, since the transparent cartridge main body and the shutter lock member are visually confounded with each other, there is induced no alienated feeling when the disc cartridge is viewed in its entirety.

In addition, since the disc cartridge of the present invention has the mistaken recording inhibiting member formed of a transparent synthetic material, the mistaken recording inhibiting member also is visually confounded with the transparent cartridge main body and hence cannot be identified when the cartridge main body is viewed. Besides, since the transparent cartridge main body and the mistaken recording inhibiting member are visually confounded with each other, there is induced no alien feeling when the disc cartridge is viewed in its entirety.

Furthermore, since the operating portion or the mistaken recording inhibiting portion is provided with a colored index, whether the mistaken recording inhibiting member has been moved to the first position of enabling re-recording of information signals or to the second position of disabling such re-recording can be discerned clearly thus assuring positive prevention of mistaken recording. If the index indicates the longest recording time for the information recording medium, it becomes possible to discern a disc cartridge of a pre-set size containing an optical disc from another disc cartridge of the same pre-set size containing a different type optical disc.

### Brief description of the Drawings

Fig.1 is an exploded perspective view showing a disc cartridge according to the present invention.

Fig.2 is a perspective view of the disc cartridge according to the present invention, as viewed from above.

Fig.3 is a perspective view, as seen from a lateral side, of a shutter lock member constituting a shutter member lock mechanism of the disc cartridge according to the present invention.

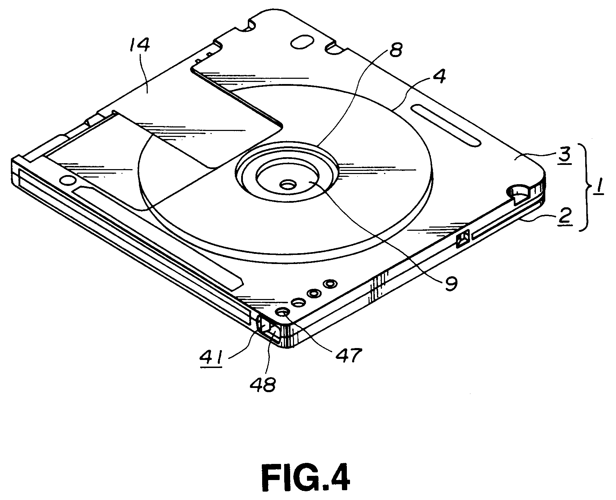

Fig.4 is a perspective view, as seen from the bottom side, of the disc cartridge according to the present invention.

Figs.5a and 5b are schematic enlarged exploded perspective views showing a mistaken recording inhibiting mechanism of the disc cartridge, wherein Fig.5a is a perspective view showing a mistaken recording inhibiting member and Fig.5b is a schematic enlarged perspective view showing a mistaken recording inhibiting portion of the lower cartridge half.

Figs.6a and 6b are perspective views showing a mistaken recording inhibiting mechanism of the disc cartridge, wherein Fig.6a shows the mistaken recording inhibiting member as set to the information signal recording enabling first position and Fig.6b shows the mistaken recording inhibiting member as set to the information signal recording disabling second position.

Figs.7a and 7b are perspective views showing the mistaken recording inhibiting mechanism for the disc cartridge having a setting direction indicating index at a hiding position, where Fig.7a shows the state in which the mistaken recording inhibiting member is set to the information signal recording enabling first position and Fig.7b shows the state in which the mistaken recording inhibiting member is set to the information signal recording disabling second position.

Fig.8 is a perspective view showing the mistaken recording inhibiting mechanism for the disc cartridge having a mistaken recording inhibiting member having a mark indicating the setting state at a hiding portion.

Fig.9 is a perspective view of the mistaken recording inhibiting mechanism for the disc cartridge having a seal indicating the setting state bonded to the hiding portion.

Figs.10a and 10b are perspective views showing the mistaken recording inhibiting mechanism for a disc cartridge having a mistaken recording inhibiting member having the indication of the maximum recording time of an optical disc contained in the main cartridge body in the hiding portion, wherein Fig.10a shows a disc cartridge housing an optical disc having the maximum recording time of "74 minutes" and Fig.10b shows a disc cartridge housing an optical disc having the maximum recording time of "60 minutes".

Fig.11 is a perspective view showing a mistaken recording inhibiting mechanism for a disc cartridge having a mistaken recording inhibiting member having a setting state indicating index in each of an actuating portion, a hiding portion and a mistaken recording inhibiting portion.

### Best Mode for Carrying out the Invention

Referring to the drawings, preferred embodiments of the disc cartridge according to the present invention will be explained in detail.

The disc cartridge according to the present invention includes a cartridge main body 1 formed by abutting and interconnecting rectangular-shaped upper and lower halves 2 and 3 formed by molding a transparent synthetic material, such as a polycarbonate resin. An optical disc 4, a disc-shaped information recording medium, is rotatably contained in the cartridge main body 1. Since the cartridge main body 1 of the disc cartridge is transparent in its entirety, the optical disc 4 contained in the cartridge main body 1 may be seen from outside.

The outer periphery of the upper and lower halves 2, 3 making up the cartridge main body 1 are formed with upstanding peripheral wall sections 5 abutted together to form an outer peripheral wall of the cartridge main body 1. In the inner surfaces of these upper and lower halves 2, 3, facing each other, there are formed disc housing section forming wall sections 6 and plural engagement protrusions 7. The disc housing section forming wall sections are formed as arcuate wall sections inscribing the upstanding peripheral wall sections 5 and abutted to each other to form a disc housing section.

Thus the upper and lower halves 2, 3 are unified together by abutting the upstanding peripheral wall sections 5 and the disc housing section forming wall sections 6 together and by engaging the plural engagement protrusions 7 with one another and welding them together by ultrasonic welding. The disc housing section forming wall sections 6 and the plural engagement protrusions 7 of the upper half 2 are not shown.

A circular opening 8 is formed at a mid portion of the lower half 3 and is employed as an opening for accommodating a disc table of the information recording/reproducing apparatus driving the optical disc 4 contained in the cartridge main body 1 when the disc cartridge is loaded on the information recording/reproducing apparatus. The opening 8 plays the role of exposing a magnet clamping metal plate 9 closing a center aperture of the optical disc 4 contained in the cartridge main body 1.

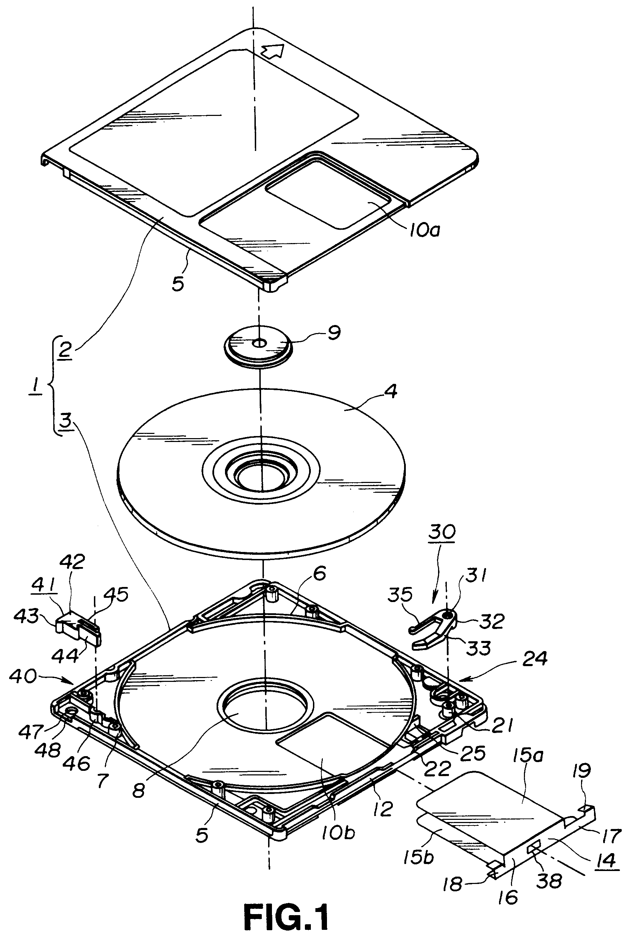

The upper and lower cartridge halves 2, 3 constituting the upper and lower surfaces of the cartridge main body 1 are provided with recording/reproducing apertures 10a, 10b playing the role of exposing at least a portion of the signal area of the optical disc 4 rotatably mounted in the disc housing section to outside across the inner and outer rims of the disc 4. These recording/reproducing apertures 10a, 10b are formed as rectangular-shaped openings disposed at a mid position in the left-and-right direction of the cartridge main body 1 from a position proximate to the opening 8 for the disc table to the front side of the cartridge main body 1, as shown in Fig.1.

In the front side of the cartridge main body 1 is formed an inserting groove 11 in which is intruded a shutter member opening member 23 provided on the recording/reproducing apparatus for moving a shutter member 14 as later explained. The inserting groove 11 has an opening end 11a on a lateral surface of the cartridge main body 1 extending perpendicularly to the front side of the cartridge main body 1. The inserting groove 11 is extended along the direction of movement of the shutter member 14. A slide guide wall 12 is mounted in the inserting groove 11 for assuring a stable operation of the shutter member 14.

An upstanding wall 13 formed in the upper cartridge half 2 plays the role of preventing the flexure along the thickness of the cartridge main body 1 by abutment of the inner peripheral surface of the lower cartridge half 3 against the inner lateral surface at the forward edge of the recording/reproducing aperture 10.

The aforementioned shutter member 14 for opening or closing the recording/reproducing aperture 10 for preventing dust and dirt from being intruded into the inside via the recording/reproducing aperture 10 so as to be deposited on the optical disc 4 is mounted on the cartridge main body 1. The shutter member 14 is formed in a substantially U-shape by press-working a thin metal plate, and is composed of shutter sections 15a, 15b for opening and closing the recording/reproducing aperture 10 and a connecting web section 16 interconnecting the distal ends of the shutter sections 15a, 15b. On either sides of the connecting web section 16 of the shutter member 14 are formed first and second slide guide section 17, 18 for guiding the shutter member 14 by stable translatory movement along the front side of the cartridge main body 1. These first and second slide guide sections are substantially U-shaped and are of a height substantially corresponding to the height of the front side of the lower cartridge half 1. The foremost part of the first slide guide section 17 is formed by bending with an engagement lug 19 which is introduced into the inserting groove 11 formed in the front side of the cartridge main body 1 on loading the shutter member on the cartridge main body 1 and which is adapted for being engaged with a shutter lock member 21 provided within the cartridge main body 1 as later explained. The shutter member 1 is fitted on the cartridge main body 1 with the first and second slide guide sections 17, 18 clamping the front side of the lower cartridge half 3. The shutter member 14 is mounted on the cartridge main body 1 for movement between the closure position of closing the recording/reproducing aperture 10 by the shutter sections 15a, 15b and the opening position of opening the recording/reproducing aperture 10.

In an area of the cartridge main body 1 extending from the peripheral edge of the recording/reproducing aperture 10 towards a lateral surface of the cartridge main body 1 and in an area thereof extending towards the front side of the cartridge main body 1, there is formed a slide recess 20 substantially of the same depth as the plate thickness of the shutter member 14. Consequently, the shutter member 14 may be mounted flush with the surface of the cartridge main body 1 by this slide recess 20 in order to prevent the thickness of the cartridge main body 1 from being increased as a result of mounting the shutter member 14 on the cartridge main body 1.

The cartridge main body 1 is provided with a shutter lock member 30 for holding the shutter member 14 mounted on the cartridge main body 1 at a closure position of closing the recording/reproducing aperture 10. The shutter lock member 30 is formed by molding a transparent synthetic material, such as polycarbonate resin. The shutter lock member 30 is integrally formed by a pivotal supporting portion 31, a lock arm portion 33 having an engagement recess 34 engaged by the engagement lug 19 formed on the shutter member 14 and an elastic deflectable portion 35 extended integrally from the pivotal supporting portion 31 for facing the lock arm portion 33. The pivotal supporting portion 31 has an inserting through-hole 32 traversed by a supporting shaft 21 set upright on the inner surface of the lower half 3 constituting the cartridge main body 1.

The cartridge main body 1 is formed of a transparent synthetic resin and hence its inside portion may be seen through. On the other hand, the shutter lock member 30 is also formed of a transparent synthetic material, so that the shutter lock member 30 is also visually confounded with the cartridge main body 1 and hence the presence of the shutter lock member cannot be identified on visual observation. Thus there is no risk of the shutter lock member being actuated for fancy sake only, while no alien feeling is invoked with the appearance of the cartridge main body 1.

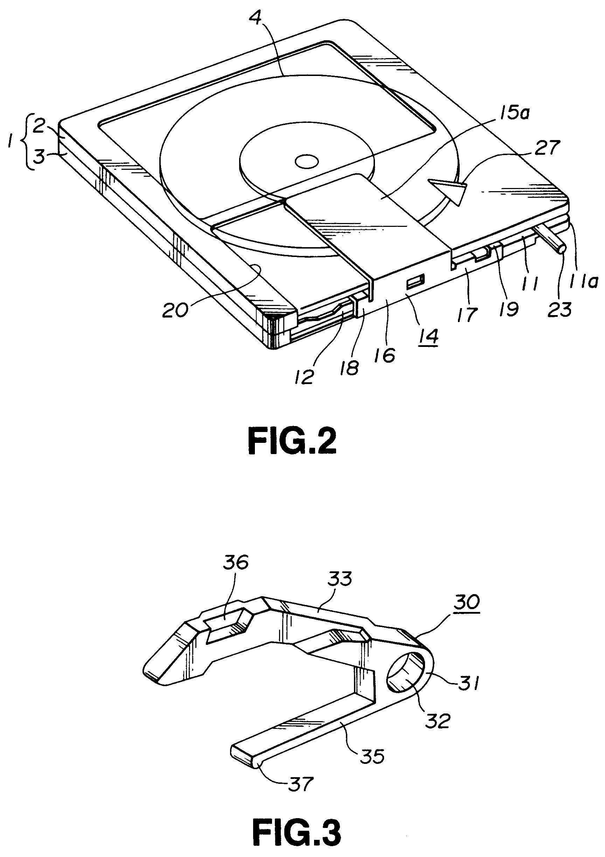

The lock arm section 33 of the shutter lock member 30 provided in the cartridge main body 1 is substantially chevron-shaped and is formed with an engagement recess 34 at a mid crest portion for being engaged by the engagement lug 19 formed on the shutter member 14. The proximal end portion of the lock arm portion 33 of the shutter lock member 30 is formed with a control shoulder 36 formed by reducing the thickness of the opposite lateral surface of the lock arm portion 33 from the distal end to the proximal end, as shown in Fig.3. When the shutter lock member 30 is mounted on the cartridge main body 1, the control shoulder 36 is engaged with a rotation control wall section 22 upstanding from the inner surface of the lower half 3 for controlling the overall rotary position of the shutter lock member 30. The free end of the elastic displacement portion 35 of the shutter lock member 30 is formed with an abutment portion 37 having a hemispherical cross-section.

The above-mentioned rotation control wall section 22 is formed at a corner 24 on which the supporting shaft 21 of the lower half 2 is set. The wall section 22 is engaged by the control shoulder 36 formed in the lock arm portion 33 of the shutter lock member 30 extending parallel to the slide guide wall section 22. The corner 24 of the lower cartridge half 3 has an abutment wall section 25 extended from the outer lateral surface of the disc housing section forming wall sections 6 parallel to the control wall section 22. The abutment wall section 25 is caused to bear against the abutment portion 37 of the elastic displacement portion 35 of the shutter lock member 30 parallel to the control wall section 22.

The shutter lock member 30 provided at the corner 24 of the lower cartridge half 3 has the lock arm portion 33 extended along the inserting groove 11 formed in the front side of the cartridge main body 1. By forming the inserting groove 11 in this manner, the engagement recess 34 formed at the crest of the lock arm portion 33 faces the inside of the inserting groove 11 so as to be engaged by the engagement lug 19 of the shutter member 14 slid on the front surface of the cartridge main body 1.

Under the usual state of the shutter member 14, the engagement lug 19 is engaged in the engagement recess 34 of the shutter lock member 30 for maintaining the shutter member 14 in a locked state at a position closing the recording/reproducing aperture 10.

With the above-described disc cartridge, when it is inserted on a cartridge loading unit provided with a cartridge holder provided in turn in the inside of the information recording/reproducing apparatus, in accordance with an inserting direction indicating mark 27 formed on the upper surface of the cartridge main body 1, the shutter opening member 23 provided on the information recording/reproducing apparatus is introduced into the inserting groove 11 formed in the front side of the cartridge main body 1. As the disc cartridge is introduced into the disc loading unit of the information recording/reproducing apparatus, the shutter opening member 23 rides on the lock arm portion 33 of the shutter lock member 30, beginning from the outer peripheral surface on the proximal end of the lock arm portion 33 of the shutter lock member 30 towards its distal end, for thrusting the lock arm portion 33 onto the inner portion of the cartridge main body 1. By the lock arm portion 33 being thrust inwardly of the cartridge main body 1, the shutter lock member 30 is rotated counterclockwise in Fig.1, about the pivotal supporting portion 31 mounting the supporting shaft 21 as the center of rotation. Thus the elastic displacement portion 35, having its abutment portion 37 abutted against the abutment supporting wall 25, is displaced elastically. By such rotation of the shutter lock member 30, the shutter member 14 has its engagement lug 19 disengaged from the engagement recess 34 in the shutter lock member 30, so that the shutter member is free to be moved relative to the cartridge main body 1. If, after the shutter member 14 is free to be moved in this manner, the disc cartridge is further introduced into the cartridge loading unit, the shutter member 14 is moved in the direction of opening the recording/reproducing aperture 10, as the shutter member is thrust by the shutter opening member 23. As a result, the recording/reproducing aperture 10 of the cartridge main body 1, so far closed by the shutter sections, is opened gradually.

When the shutter member 14 is slid to the position of completely opening the recording/reproducing aperture 10, the thrusting pressure exerted on the lock arm portion 33 by the shutter opening member 23 is released, so that the elastic displacement portion 35, so far displaced elastically, is restored to its original state elastically. As a result, the shutter lock member 30 is rotated clockwise in Fig.1, about the pivotal supporting portion 31 as the center of rotation, so that the engagement recess 34 faces the inserting groove 11.

When the recording or reproduction of the information signals on the optical disc 4 loaded in the information recording/reproducing apparatus comes to a close, and the operation of ejecting the disc cartridge from the information recording/reproducing apparatus is carried out, a shutter movement pin, not shown, provided on the information recording/reproducing apparatus, is engaged in a pin engagement opening 38 formed at a mid portion of the connecting web section 16 of the shutter member 14 for producing relative movement of the shutter member 14 with respect to the cartridge main body 1 in a direction of closing the recording/reproducing aperture 10.

By such operation of the shutter member 14, the engagement lug 19 rides on the guide surface provided on the distal end of the lock arm portion 33 of the shutter lock member 30 which has been rotated back to its original position. The elastic displacement portion 35 of the shutter lock member 30 is elastically displaced by the engagement lug 19. As the operation of pulling out the disc cartridge from the information recording/reproducing apparatus is continued further, the engagement lug 19 of the shutter member 14 is engaged with the engagement recess 34 in the shutter lock member 30. This locks the shutter member 14 at a position of closing the recording/reproducing aperture 10.

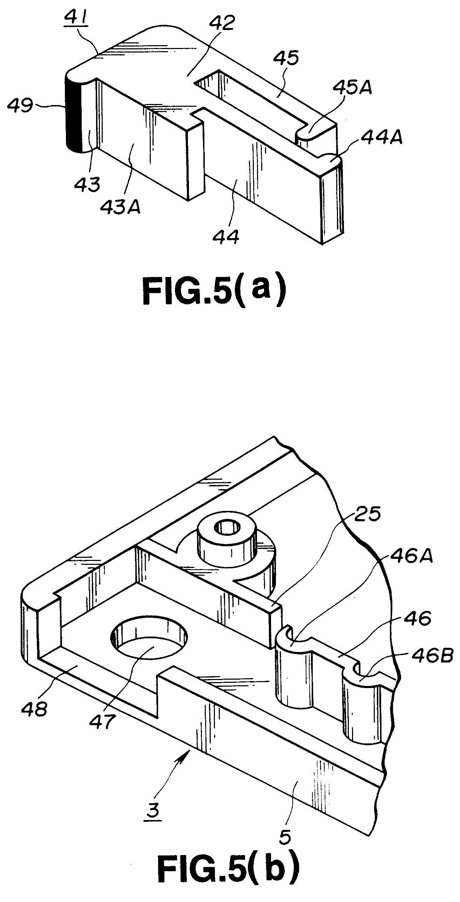

At a corner 40 of the disc cartridge diagonally opposite to the corner 24 provided with the upstanding supporting shaft 24 of the lower half 3 is arranged a mistaken recording inhibiting mechanism inclusive of a mistaken recording inhibiting member 41 and the mistaken recording detecting opening. A mistaken recording inhibiting member 41, constituting the mistaken recording inhibiting mechanism, is changed over between the first position of closing the mistaken recording detection opening 47 along the lower half 3 and the second position of opening the mistaken recording detection opening 47 for enabling and disabling the recording of information signals on the optical disc 4, respectively. Similarly to the cartridge main body 1 and the shutter lock member 30, the mistaken recording inhibiting member 41 is formed of a transparent synthetic material, such as polycarbonate resin, so that it is visually confounded with the cartridge main body 1 when the cartridge main body is viewed from outside, and hence the presence of the mistaken recording inhibiting member 41 cannot be recognized from outside the cartridge main body 1. The mistaken recording inhibiting member 41 is integrally formed by a substantially square mistaken recording inhibiting portion 42, an operating portion 43, a first elastic arm portion 44 and a second elastic arm portion 45, as shown in Fig.5a. The mistaken recording inhibiting portion is sized to close st least a detection opening 47 formed in the lower cartridge half 3.

The operating portion 43 of the mistaken recording inhibiting member 41 is protruded in the form of a rib on one lateral side of the mistaken recording inhibiting portion 42, and has a colored portion 49 on its surface formed by, for example, an ink jetting method. The first and second elastic arm portions 44, 45 are extended parallel to each other from one side of the mistaken recording inhibiting portion 42 extending perpendicularly to the operating portion 43, with the first elastic arm portion 44 being longer in length than the second elastic arm portion 45. The distal ends of the lateral sides of these first and second elastic arm portions 44, 45 facing each other are formed with engagement protrusions 44A, 45A, respectively. The lateral surface of the mistaken recording inhibiting portion 42 from which is protruded the operating portion 43 is slightly protruded parallel to the first elastic arm portion 44 to provide a hiding portion 43A.

At a corner 40 of the lower cartridge half 3, the upstanding peripheral wall section 5 is partially cut open to form a rectangular operating opening 48, as shown in Fig.5b. The operating opening 48 permits the operating portion 43 of the mistaken recording inhibiting member 41 to be exposed to outside, and is of a length to permit the mistaken recording inhibiting member 41 to be changed over between the first position of closing the detection opening 47 by the mistaken recording inhibiting portion 42 and the second position of opening the detection opening 47.

The lower half 3 has a detection opening 47 in association with the operating opening 48. The inner surface of the lower cartridge half 3 is integrally formed with a guide wall section 26 for the mistaken recording inhibiting member 41 on the opposite side of the operating opening 48 with respect to the detection opening 47. Inwardly of the upstanding peripheral wall section 5, a slide guide wall section 46 for guiding the mistaken recording inhibiting member 41 during its movement is formed for being protruded from the inner surface of the lower cartridge half 3. The slide guide section 46 is formed with first and second click recesses 46A, 46B bent towards the upstanding peripheral wall section 5. These first and second click recesses 46A, 46B are formed at such positions that, when the mistaken recording inhibiting member 41 is changed over between the first position of closing the detection opening 47 by the mistaken recording inhibiting portion 42 and the second position of opening the detection opening 47, they are engaged by the engagement protrusion 45A of the second elastic arm portion 45 for holding the mistaken recording inhibiting member 41.

When the mistaken recording inhibiting member 41 is at the first position of closing the detection opening 42 by the mistaken recording inhibiting portion 42, the engagement protrusion 45A of the second elastic arm portion 45 is engaged with the first click recess 46A of the slide guide wall section 46. When the mistaken recording inhibiting member 41 has been moved to its first position, the intrusion of the detection mechanism provided in the information recording/reproducing apparatus into the detection opening 47 is inhibited for enabling the recording of information signals on the optical disc 4 contained in the cartridge main body 1.

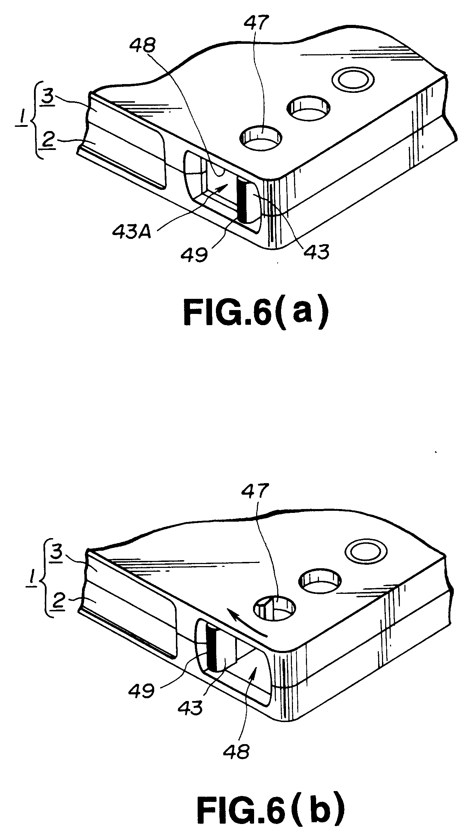

Meanwhile, when the mistaken recording inhibiting member 41 has been moved to its first position, as discussed above, the operating portion 43 is positioned at the right-hand end of the operating opening 48, as shown in Fig.6a, and closes the operating opening 48 with the hiding portion 43A. For changing over from the state of enabling the recording of information signals on the optical disc 4 to the state of inhibiting the rerecording of the information signals, the mistaken recording inhibiting member 41 is moved to the second position. That is, the mistaken recording inhibiting member 41 is moved to the second position by setting the operating portion 43 from the first position shown in Fig.6a to a leftmost position of the operating opening 48 shown in Fig.6b. With the mistaken recording inhibiting member 41 set to its first position, the mistaken recording inhibiting portion 42 opens the detection opening 47. Thus the mistaken recording inhibiting mechanism of the information recording/reproducing apparatus is intruded into the detection opening 47 for disabling the recording of information signals on the optical disc 4 contained in the cartridge main body 1.

The mistaken recording inhibiting member 41 is maintained at the second position of opening the detection opening 47 by the mistaken recording inhibiting portion 42 by the engagement protrusion 45A of the second elastic arm portion 45 riding on the lateral side of the slide guide wall section 46 from the first click recess 46A of the slide guide wall section 46 into engagement with the second click recess 46B.

Meanwhile, the mistaken recording inhibiting member 41 is slid at the corner 40 of the cartridge main body 1 and, when the mistaken recording inhibiting member 41 has been moved to the first and second positions, the first and second elastic arm portions 44, 45 have the engagement protrusions 44A, 45A engaged in the first and second click recesses 46A, 46B, under elastic deformation of the first and second elastic arm portions 44, 45. Thus the synthetic material having superior sliding properties and elastic displacement characteristics is selected and employed for the mistaken recording inhibiting member 41.

Since the cartridge main body 1 and the mistaken recording inhibiting member 41 are formed of a transparent synthetic material, the mistaken recording inhibiting member 41 is visually unified with the cartridge main body 1, and unified in appearance with the cartridge main body 1, so that the mistaken recording inhibiting member 41 cannot be viewed. However, since the colored portion 49 is provided on the surface of the operating portion, the movement position of the operating portion 43 may be clearly identified by the colored portion 49. Thus it becomes possible to prevent such inconvenience that other irrelevant information signals be recorded on the optical disc 4 on which there are pre-recorded the desired information signals.

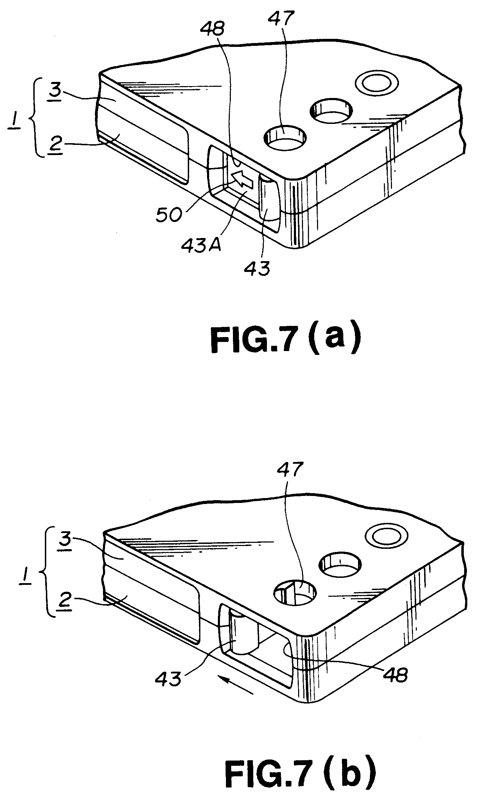

In the above-described embodiment, the colored portion 49 is provided on the surface of the operating portion 43 for clear identification of the mistaken recording inhibiting member 41. In place of the colored portion 49, an index 50 consisting in an arrow mark indicating the operating direction of the mistaken recording inhibiting member 41 may be provided on the surface of the hiding portion 43A, as shown in Figs.7a and 7b. In the present embodiment, the mistaken recording inhibiting member 41 is formed of the transparent polyacetal resin, as in the previous embodiment. The index 50 may be formed by printing, such as by ink jet printing.

When the mistaken recording inhibiting member 41 has been moved to the first position of disabling the recording of information signals on the optical disc, the index 50 formed on the hiding portion 43A located in registration with the operating opening 48 is displayed via the operating opening 48, as shown in Fig.7a. Conversely, when the mistaken recording inhibiting member 41 has been moved to the second position of enabling the recording of information signals on the optical disc 4, the index 50 is positioned inwardly of the upstanding peripheral wall section 5, as shown in Fig.7a.

In place of the index 50 consisting in an arrow mark indicating the operating direction, a colored indication 51 may be provided on the surface of the hiding portion 43A of the mistaken recording inhibiting member 41.

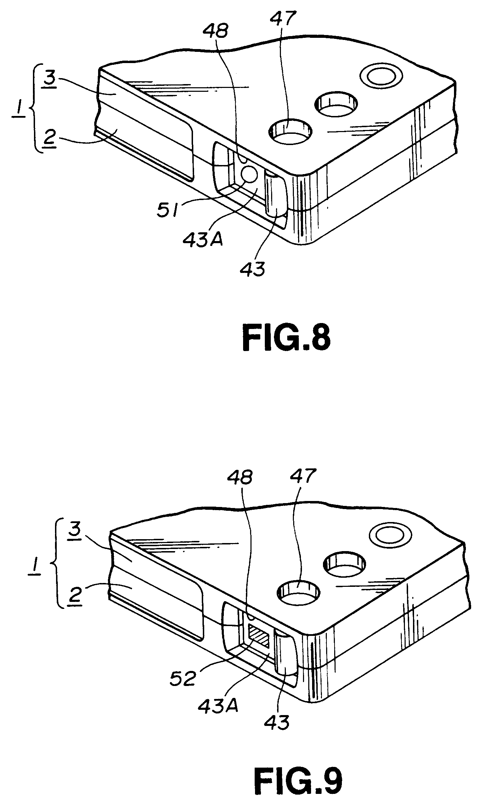

An indication 52 consisting in a seal or the like may be bonded on the surface of the hiding portion 43A of the mistaken recording inhibiting member 41, as shown in Fig.9.

The index 50 or indications 51, 52, provided on the mistaken recording inhibiting member 41, may be suitably selected as to the shape, color or the like. The index or the indications may be provided by printing other than ink jet printing, such as hot stamping, silk screen printing or pad printing. Alternatively, a seal having the index 50 or the indications 51, 52 pre-printed thereon may also be bonded to the mistaken recording inhibiting member 41.

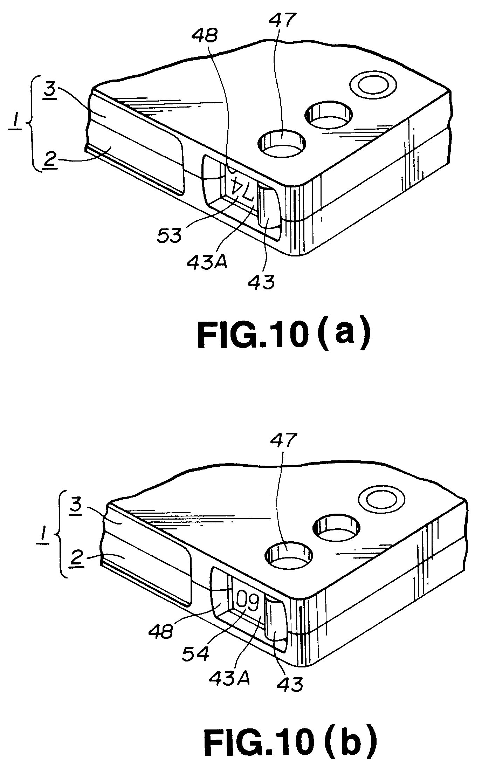

Still alternatively, numerical indications indicating the longest recording tie for the optical disc 4 may be formed by printing on the surface of the hiding portion 43A of the mistaken recording inhibiting member 41, as shown in Figs. 10a and 10b. The mistaken recording inhibiting member 41 shown in Fig.10a indicates the disc cartridge containing the optical disc 4 having the longest recording time for information signals of "74" minutes. Thus a number "74" is printed as the index 53. The mistaken recording inhibiting member 41 shown in Fig.10b indicates the disc cartridge containing the optical disc 4 having the longest recording time for information signals of "60" minutes. Thus a number "60" is printed as the index 53.

By employing the mistaken recording inhibiting mechanism simultaneously as indicating mens for the longest recording time for the optical disc 4, the design format of the optical disc 4 contained in the cartridge main body 1 may be known from the back side of the cartridge main body 1. Thus the disc cartridges having the outer profile or shape in common and containing optical discs with different recording time durations may be discerned easily and the optical disc 4 of the desired recording time duration may be positively loaded on the information recording/reproducing apparatus.

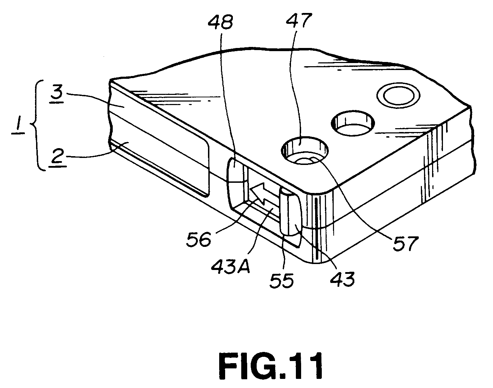

In addition to providing a colored display portion 55 on the surface of the operating portion 43, an index 56 consisting in an arrow mark indicating the operating direction may be provided on the surface of the hiding portion 43, as shown in Fig.11. The index 56 and the colored portion 57 may be provided on the mistaken recording inhibiting member 41 by the above-mentioned printing method or by bonding a seal having the index 50 and the indications 51, 52 pe-printed thereon. By providing the colored portion 57 on the surface of the mistaken recording inhibiting portion 42, the colored portion 57 may be located in registration with the detection opening 47 when the mistaken recording inhibiting member 41 has been moved to the first position, so that the recordable state is indicated clearly.

The cartridge main body 1, the shutter lock member 30 and the mistaken recording inhibiting member 41 may be formed by molding a transparent synthetic material. The polycarbonate resin may be exemplified by the following resins having superior light transmittance and superior mechanical properties:
Panlight L-1225 (trade name of the product by TEIJIN KAGAKU Co.Ltd.); Panlight L-1250 (trade name of the product by TEIJIN KAGAKU Co.Ltd.); Novalex 7022R (trade name of the product by MITSUBISHI KASEI Co. Ltd.); Eupiron S-2000 (trade name of the product by MITSUBISHI KASEI Co. Ltd.); Eupiron S-3000 (trade name of the product by MITSUBISHI KASEI Co. Ltd.); Eupiron H-3000 (trade name of the product by MITSUBISHI KASEI Co. Ltd.); Tafron IR1900H (trade name of the product by IDEMITSU SEKIYU KAGAKU Co. Ltd.); Tafron IR1700H (trade name of the product by IDEMITSU SEKIYU KAGAKU Co.Ltd.); Lexan 100 (trade name of GEPlaxtics Inc.); Lexan 120 (trade name of GEPlaxtics Inc.); Lexan 130 (trade name of GEPlaxtics Inc.); Lexan 140 (trade name of GEPlaxtics Inc.); Macrolon 2405 (trade name of Bayer Inc.).

In the above-described embodiments, description is made of a disc cartridge having the optical disc 4 contained therein. The present invention may be broadly applied to a disc cartridge having a shutter member movable for opening and closing the recording/reproducing aperture formed in the cartridge main body, a shutter lock member for holding the shutter member at the position of closing the recording/reproducing aperture and/or a mistaken recording inhibiting member. That is, the present invention may be broadly applied to a disc cartridge containing a disc-shaped information recording medium, such as a magneto-optical disc, an optical disc or a magnetic disc.

### Industrial Applicability

Since the disc cartridge according to the present invention is made up of an upper half and a lower half formed of a transparent synthetic material, the recording medium contained in the cartridge main body may be seen from outside.

On the other hand, since the shutter lock member for maintaining the shutter member opening or closing the recording/reproducing aperture in the cartridge main body is formed of a transparent synthetic material, the shutter lock member is visually unified with the cartridge main body and hence cannot be seen from outside. Thus the shutter lock member cannot be discerned from other components and the state of the shutter lock member in the cartridge main body cannot be deciphered with ease, so that it becomes possible to avoid such situation in which the shutter lock member be unlocked by an intentional incorrect operation to permit dust and dirt to be intruded via the recording/reproducing aperture or to injure the information recording medium. On the other hand, since the cartridge main body and the shutter member provided in the cartridge main body are of the same color and the disc cartridge in its entirety is recognized as being transparent to eliminate alienation in appearance.

In addition, since the shutter lock member having its lock arm portion supported for elastic displacement on the support portion provided on the cartridge main body is formed of the same synthetic material as that of the upper and lower cartridge halves of the cartridge main body, partial attrition of one of the lock arm portion and the support portion or formation of chips by the elastic displacement operation of the lock arm portion may be decreased. The shutter member may be smoothly locked or unlocked by the shutter lock member, while the information recording medium may be prevented from being damaged by the chips.

Since the mistaken recording inhibiting member movable between the first position of enabling the recording of information signals on the information recording medium contained in the cartridge main body and the second position of disabling such recording is also formed of a transparent synthetic material, the mistaken recording inhibiting member may be unified in color with the cartridge main body and cannot be identified when seen from outside, with the consequence that the disc cartridge is recognized on the whole as being transparent to eliminate alienation in appearance.

Since the mistaken recording inhibiting member is formed of the same synthetic material as the material of the upper and lower cartridge halves making up the cartridge main body, partial attrition or chip formation in one of the mutually moved parts may be decreased to permit smooth sliding movement of the mistaken recording inhibiting member. On the other hand, there is no such inconvenience that the information recording medium be damaged by chips.

In addition, since the mistaken recording inhibiting member is provided with a colored index indicating the state of movement of the mistaken recording inhibiting member to the first or second position, the position of movement can be identified clearly, such that the risk of recording other information signals on an information recording medium having desired information signals pre-recorded thereon may be prevented positively.

## Claims

1. A disc cartridge comprising:
a cartridge main body made up of a pair of cartridge halves formed in their entirety of a transparent synthetic material, said cartridge main body having a disc-shaped recording medium rotatably contained therein and including a recording/reproducing aperture for exposing at least a portion of the recording medium contained therein to outside along its radius, a shutter mounted for movement on said cartridge main body for opening and closing said recording/reproducing aperture, and
a shutter lock member formed in its entirety of a transparent synthetic material, said shutter lock member engaging with and holding said shutter at a position of closing said recording/reproducing aperture by said shutter.

2. The disc cartridge as claimed in claim 1 wherein the transparent synthetic material of said upper and lower cartridge halves and the shutter lock member is a polycarbonate resin.

3. The disc cartridge as claimed in claim 1 wherein said shutter lock member comprises a support portion supported within the cartridge main body and an elastically deflectable arm portion formed integrally with said support portion and having an engagement portion engaged with said shutter.

4. The disc cartridge as claimed in claim 1 wherein the mistaken recording inhibiting member formed in its entirety of a polycarbonate resin is mounted for movement in the cartridge main body and mounted so as to be operated from outside of the cartridge main body.

5. The disc cartridge as claimed in claim 1 wherein the shutter is formed of an opaque material.

6. A disc cartridge comprising
a cartridge main body made up of a pair of cartridge halves formed in their entirety of a transparent synthetic material, said cartridge main body having a disc-shaped recording medium rotatably contained therein and including a recording/reproducing aperture for exposing at least a portion of the recording medium contained therein to outside along its radius and a detection opening for indicating whether or not recording of information signals on the disc-shaped recording medium contained therein is possible, and
a mistaken recording inhibiting member movably mounted in said main cartridge body and including an operating portion having at least its portion exposed to outside via an operating opening formed in a lateral surface of said cartridge main body, an opening/closure portion for opening and closing said detection opening, and a holding portion operated by said operating portion for holding said opening/closure portion at a first position of closing said detection opening and a second position of opening said detection opening, said operating portion, opening/closure portion and the holding portion being formed integrally of a transparent synthetic material.

7. The disc cartridge as claimed in claim 6 wherein the transparent synthetic material of the upper and lower cartridge halves and the mistaken recording inhibiting member is a polycarbonate resin.

8. The disc cartridge as claimed in claim 7 wherein the holding portion of said mistaken recording inhibiting member has a pair of arm portions holding a guide portion formed for being protruded into one of the upper and lower cartridge halves.

9. The disc cartridge as claimed in claim 6 wherein one of the operating portion and the closure portion of the mistaken recording inhibiting member is colored.

10. The disc cartridge as claimed in claim 6 wherein said operating portion of the mistaken recording inhibiting member has an index indicating the longest recordable time on the disc-shaped recording medium contained in the disc cartridge.
